# EUROPEAN PATENT APPLICATION

(11) **EP 4 510 595 A1**
(43) Date of publication of application: **19.02.2025**
(21) Application number: 23935898.9
(22) Date of filing: 22.09.2023
(51) Int. Cl.: H04N 21/43, H04N 21/4363

(54) **VIDEO SYNCHRONOUS DISPLAY METHOD AND APPARATUS, DEVICE AND MEDIUM**

(30) Priority: 02.06.2023 CN 202310646002
(71) Applicant: Ecarx (Hubei) Tech Co., Ltd., Wuhan, Hubei 430056 (CN)
(72) Inventor: LOU, Zhaohui, Wuhan Hubei 430056 (CN); DENG, Pengyong, Wuhan Hubei 430056 (CN); DENG, Zhilong, Wuhan Hubei 430056 (CN)
(74) Representative: Ipside
(86) International application number: PCT/CN2023/120542
(87) International publication number: WO 2024/244224

(57) **Abstract**

A video synchronous display method, apparatus, and device and medium, where the method is executed by a first chip, the first chip serves as a screen projected terminal and receives screen projection data and a screen projection instruction sent by a second chip serving as a screen projection terminal, the method includes: in response to receiving (S110) a screen projection pause instruction sent by the screen projection terminal, parsing a video frame number value of a received video frame sequence to which a current start frame belongs; determining (S120) a current to-be-decoded frame number according to a determined current decoded frame number of the video frame sequence combined with the video frame number value; determining (S130) to-be-decoded video frame information according to the current to-be-decoded frame number and a received final video frame information; and transmitting (S140) the to-be-decoded video frame information to a decoder, and displaying a target picture fed back by the decoder corresponding to the to-be-decoded video frame information.

## Description

The present application claims priority to Chinese Patent Application No. 202310646002.7 filed with China National Intellectual Property Administration on June 2, 2023, which is hereby incorporated by reference in its entirety.

### TECHNICAL FIELD

The present application relates to the technical field of display, such as a video synchronous display method and apparatus, a device and a medium.

### BACKGROUND

With the development of the vehicles industry, many of vehicles will be equipped with a plurality of display screens, including a central control display screen in front row and a corresponding entertainment display screen in rear row. At the same time, the front and rear screens may share the display contents of some applications (App), for example, movie videos may be projected from a front-row display screen to a rear-row display screen for watching together. Here it involves APP content sharing, there will be two screens that need to display the same content at the same time. For the co-display solution, if it is video transmission within the same operating system (OS), it is relatively simple to implement and may be achieved directly through, for example, a screenshot and paste solution within the same OS.

When performing screen projection across chips and systems, it involves several processes such as capturing, encoding, transmitting, decoding, and displaying of image data.

### SUMMARY

The present application provides a video synchronous display method and apparatus, a device and a medium.

According a first aspect of the present application, there is provided a video synchronous display method, which is executed by a first chip, the first chip serving as a screen projected terminal and receiving screen projection data and a screen projection instruction sent by a second chip serving as a screen projection terminal, the method includes:
in response to receiving a screen projection pause instruction sent by the screen projection terminal, parsing a video frame number value of a received video frame sequence to which a current start frame belongs;
determining a current to-be-decoded frame number according to a determined current decoded frame number of the video frame sequence combined with the video frame number value;
determining to-be-decoded video frame information according to the current to-be-decoded frame number and a received final video frame information; where the final video frame information is generated at the screen projection terminal by encoding video data corresponding to a pause picture;
transmitting the to-be-decoded video frame information to a decoder, and displaying a target picture fed back by the decoder corresponding to the to-be-decoded video frame information, where the target picture is the same as the pause picture.

According a second aspect of the present application, there is provided a video synchronous display apparatus, including:
a number parse module, configured to, in response to receiving a screen projection pause instruction sent by the screen projection terminal, parse a video frame number value of a received video frame sequence to which a current start frame belongs;
a frame number determination module, configured to determine a current to-be-decoded frame number according to a determined current decoded frame number of the video frame sequence combined with the video frame number value;
an information determination module, configured to determine to-be-decoded video frame information according to the current to-be-decoded frame number and a received final video frame information; where the final video frame information is generated at the screen projection terminal by encoding video data corresponding to a pause picture;
a picture display module, configured to transmit the to-be-decoded video frame information to a decoder, and display a target picture fed back by the decoder relative to the to-be-decoded video frame information, where the target picture is the same as the pause picture.

According a third aspect of the present application, there is provided an electronic device, including:
at least one processor; and
a memory communicatively connected to the at least one processor; where
the memory stores a computer program executable by the at least one processor, and the computer program is executed by the at least one processor, to enable the at least one processor to execute the video synchronous display method according to any one of the embodiments of the present application.

According a fourth aspect of the present application, there is provided a computer-readable storage medium, where the computer-readable storage medium stores computer instructions, which, when executed by a processor, implement the video synchronous display method described in any one of the embodiments of the present application.

It should be understood that the contents described in this section are not intended to identify key or important features of the embodiments of the present application, nor are they intended to limit the scope of the present application. The other features of the present application may be easily understood through the following description.

### BRIEF DESCRIPTION OF DRAWINGS

FIG. 1 is a flowchart of a video synchronous display method according to Embodiment 1 of the present application.
FIG. 2 is a flowchart of a video synchronous display method according to Embodiment 2 of the present application.
FIG. 3 is an example flowchart of a video synchronous display method according to Embodiment 2 of the present application.
FIG. 4 is a structural schematic diagram of a video synchronous display apparatus according to Embodiment 3 of the present application.
FIG. 5 is a structural schematic diagram of an electronic device according to an embodiment of the present application.

### DESCRIPTION OF EMBODIMENTS

When performing screen projection across chips and systems, it involves several processes such as capturing, encoding, transmitting, decoding, and displaying of image data. When sharing a movie to other screen display scenes, when a user clicks a video pause operation on the screen projection terminal, a decoder is notified to end this decoding process and decode a remaining buffer frame video for display.

However, due to there is a requirement of sequence frame decoding rule for decoding by the decoder of a screen projected terminal system, which may cause a certain amount of video frame data to be cached and left in the decoder during decoding, and ultimately causes that a screen of a screen projection terminal and a screen of a screen projected terminal have different displays when in a paused state, and the decoder needs to be reinitialized when restoring after pause, which will consume resources of the video processing unit (VPU) and the central processing unit (CPU), and since it takes time for the decoder to initialize, the display effect of the screen projected terminal may be laggy.

In order to cope with the above situation, embodiments of the present application provide a video synchronous display method and apparatus, a device and a medium.

To make the skilled in the art to better understand the solutions of the present application, the following clearly and comprehensively describes the technical solutions in embodiments of the present invention with reference to the accompanying drawings in embodiments of the present application. Apparently, the described embodiments are merely some rather than all embodiments of the present application. All other embodiments obtained by persons of ordinary skill in the art based on embodiments of the present application without creative effort shall fall within the protection scope of the present application.

It should be noted that the terms "first", "second" etc., used in the specification, claims, and the aforementioned drawings of the present application are used to distinguish similar objects and do not necessarily used to describe specific orders or sequences. It should be understood that such terms are interchangeable where appropriate so that the embodiments of the present application may be implemented in orders other than those illustrated or described here. In addition, the terms "including" and "having" as well as their any variations, are intended to cover non-exclusive inclusions. For example, a process, method, system, product, or device that includes a series of steps or units does not need to be limited to the steps or units clearly listed but may include other steps or units that are not clearly listed or are inherent to the process, method, product, or device.

### Embodiment 1

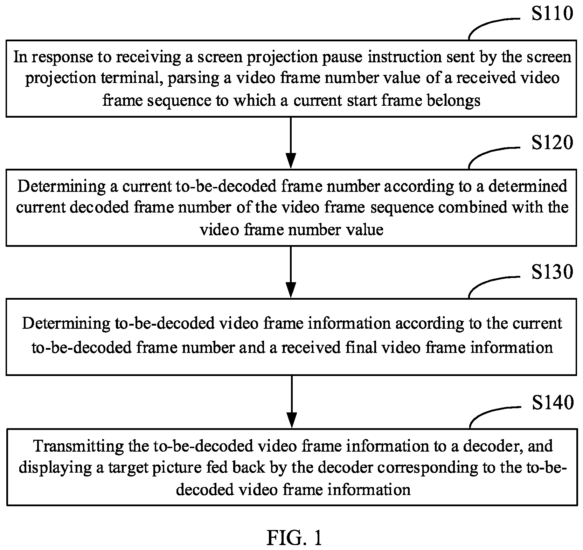

FIG. 1 is a flowchart of a video synchronous display method according to Embodiment 1 of the present application. The present embodiment may perform screen projection across systems, the method may be executed by a video synchronous display apparatus of a first chip, the first chip serves as a screen projected terminal and receives screen projection data and a screen projection instruction sent by a second chip serving as a screen projection terminal. The video synchronous display apparatus may be implemented in a form of hardware and/or software, and may be configured in the first chip of an electronic device. As shown in FIG. 1, the method includes the following steps.

S110, parsing a video frame number value of a received video frame sequence to which a current start frame belongs, in response to receiving a screen projection pause instruction sent by a screen projection terminal.

In the present embodiment, the screen projection pause instruction may be understood as an instruction sent by the screen projection terminal to pause a video being played, for example, when a user on the screen projection terminal clicks a pause button, a screen projection pause instruction may be sent to the screen projected terminal. The video frame sequence may be understood as a group of sequential pictures, namely group of pictures (GOP). In a decoding process of a decoder (such as H264), it is a complete group of video frames, which must be played and displayed completely. This information may be included in a header of I frame of H264 video frame, and when the decoder works, the decoder must decode a complete video frame sequence according to information provided by GOP. If the frame number of the decoder does not meet a requirement of GOP sequence frame number, this may cause the H264 decoder to pause decoding of a current sequence frame. The current start frame may be understood as a video frame with inter-frame compression, and may be decoded into a complete picture independently, and an I frame is a start frame of a GOP sequence frame. The video frame number value may be understood as the number of all video frames included in the video frame sequence.

Where the screen projected terminal belongs to a first operating system, and the screen projection terminal belongs to a second operating system, that is, they belong to two independent operating systems. The first operating system may be the same as the second operating system, such as both are Android systems.

For example, when receiving a screen projection pause instruction sent by the screen projection terminal, a processor may obtain and parse the received video frame number value of a header of I frame of the current start frame, i.e., GOP value, this value represents how many video frames form the video frame sequence to which the current start frame belongs.

S120, determining a current to-be-decoded frame number according to a determined current decoded frame number of the video frame sequence combined with the video frame number value.

In the present embodiment, the decoded frame number may be understood as the number of video frames which have been decoded in the video frame sequence when paused, and may be recorded at each decoding. The current to-be-decoded frame number may be understood as the number of video frames which have not been decoded in the video frame sequence.

For example, the processor may determine the current to-be-decoded frame number by subtracting the determined current decoded frame number of the video frame sequence from the video frame number value.

S130, determining to-be-decoded video frame information according to the current to-be-decoded frame number and a received final video frame information.

Where the final video frame information is generated at the screen projection terminal by encoding video data corresponding to a pause picture.

In the present embodiment, the final video frame information may be understood as the information generated after hardware encoding of final video data corresponding to a pause picture sent by the screen projection terminal when paused. The to-be-decoded video frame information may be understood as a video format used for decoding by the decoder.

It should be known that when decoding, the decoder searches for a frame number of a frame header sequence in the to-be-decoded video frame information to determine whether it is consistent with a frame number of the frame header sequence decoded last time, and if it is consistent, the decoder pauses working, and if it is inconsistent, the decode continues to decode the to-be-decoded video frame information.

For example, the processor may determine number of times to modify the frame number of the frame header sequence of the received final video frame information according to the current to-be-decoded frame number, so as to ensure that the frame number of the frame header sequence queried by the decoder every time is different from the frame number of the frame header sequence decoded last time, and then the to-be-decoded video frame information is generated by the modified frame number of the frame header sequence and the to-be-decoded final video frame, where the final video frame information is generated at the screen projection terminal by encoding video data corresponding to a pause picture.

S 140, transmitting the to-be-decoded video frame information to a decoder, and displaying a target picture fed back by the decoder corresponding to the to-be-decoded video frame information.

Where the target picture is the same as the pause picture.

In the present embodiment, the target picture may be understood as a picture used for screen projection and display after decoding.

For example, the processor may transmit the to-be-decoded video frame information to the decoder, and after the decoder decodes, the processor may receive the target picture fed back by the decoder corresponding to the to-be-decoded video frame information, and perform screen projection and display on the target picture.

The embodiments of the present application are executed by a first chip, the first chip serves as a screen projected terminal and receives screen projection data and a screen projection instruction sent by a second chip serving as a screen projection terminal, the method includes: when receiving a screen projection pause instruction sent by the screen projection terminal, parsing a video frame number value of a received video frame sequence to which a current start frame belongs; determining a current to-be-decoded frame number according to a determined current decoded frame number of the video frame sequence combined with the video frame number value; determining to-be-decoded video frame information according to the current to-be-decoded frame number and a received final video frame information; transmitting the to-be-decoded video frame information to a decoder, and displaying a target picture fed back by the decoder corresponding to the to-be-decoded video frame information. The synchronization of video display at both cross-system's terminals is realized on the principle of relatively small CPU resource consumption and VPU consumption, and the rapid response of the screen projected terminal when the screen projection terminal restores playing is realized.

In an embodiment, on the basis of the foregoing embodiments, after transmitting the to-be-decoded video frame information to the decoder, and displaying the target picture fed back by the decoder corresponding to the to-be-decoded video frame information, the method may further includes:
updating the current decoded frame number based on the to-be-decoded video frame information, to obtain an updated current decoded frame number.

For example, the processor may inquire whether the to-be-decoded video frame information is an end decoding instruction, and if the to-be-decoded video frame information is the end decoding instruction, which corresponds to the decoded video frame number value being equal to the video frame number value of the video frame sequence, then the decoded frame number is not updated; and if the to-be-decoded video frame information is not the end decoding instruction, the current decoded frame number is added by one, to obtain an updated current decoded frame number.

In an embodiment, on the basis of the foregoing embodiments, the method may further includes:
when receiving a screen projection continuation instruction, determining a picture to be displayed and displaying the picture to be displayed according to received data to be projected.

In the present embodiment, the screen projection continuation instruction may be understood as an instruction for continuing playing. For example, when the user of the screen projection terminal clicks a continue-playing button, a screen projection continuation instruction is generated and sent to the screen projected terminal. The data to be projected may be understood as the data for screen projection on the screen projected terminal. The picture to be displayed may be understood as decoded display picture data.

For example, when the processor receives the screen projection continuation instruction, it may determine a video frame number value of a video frame sequence to which a current start frame belongs according to the received data to be projected, and re-record the decoded frame number, then convert the data to be projected into a form that may be decoded by the decoder, and transmit it to the decoder, and receive the data of the picture to be displayed which are decoded by the decoder, then play the picture to be displayed, to realize synchronous playing with the picture of the screen projection terminal.

In an embodiment, determining a picture to be displayed and displaying the picture to be displayed according to received data to be projected may include:
a1, parsing a target video frame number value of a target video frame sequence to which the data to be projected belongs.

In the present embodiment, the target video frame sequence may be understood as a video frame sequence corresponding to the data to be projected. The target video frame number value may be understood as a value reflecting the number of video frames included in the target video frame sequence.

For example, the processor may obtain and parse the video number value of a header of I frame of the current start frame of the target video frame sequence to which the received data to be projected belongs, and use it as the target video frame number value.

b1, resetting the current decoded frame number of the target video frame sequence, to obtain a reset current decoded frame number.

For example, the processor may reset the current decoded frame number of the target video frame sequence, that is, clear to restart recording, to obtain the reset current decoded frame number.

c1, disassembling the data to be projected, to form a data packet to be decoded.

For example, the processor may disassemble the data to be projected according to a preset rule, thereby obtaining a data packet to be decoded in a format which may be decoded by the decoder.

d1, transmitting the data packet to be decoded to a decoder for decoding.

For example, the processor may transmit the data packet to be decoded to the decoder for decoding.

e1, receiving a picture to be displayed fed back by the decoder, and displaying the picture to be displayed.

For example, the processor may receive the picture to be displayed fed back by the decoder, and transmit it to a corresponding display for screen projection display of the picture to be displayed.

### Embodiment 2

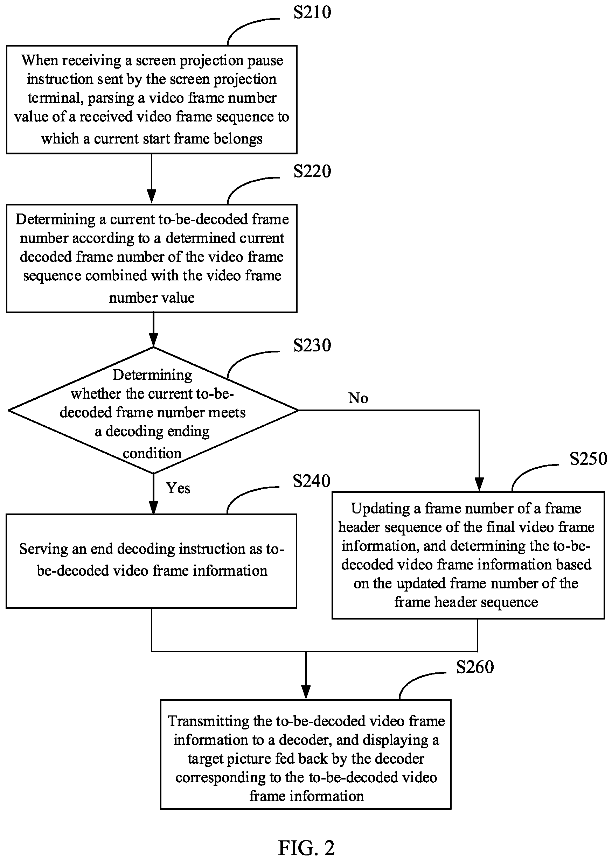

FIG. 2 is a flowchart of a video synchronous display method according to Embodiment 2 of the present application, and the present embodiment is adjusted on the basis of the foregoing embodiments. As shown in FIG. 2, the method includes steps below.

S210, when receiving a screen projection pause instruction sent by the screen projection terminal, parsing a video frame number value of a received video frame sequence to which a current start frame belongs.

S220, determining a current to-be-decoded frame number according to a determined current decoded frame number of the video frame sequence combined with the video frame number value.

S230, determining whether the current to-be-decoded frame number meets a decoding ending condition.

In the present embodiment, the decoding ending condition may be understood as a condition for determining whether decoding of the video frame sequence has been completed.

For example, the processor may determine whether the current to-be-decoded frame number is greater than zero. If the current to-be-decoded frame number is equal to zero, it means that the decoded frame number is the same as the video frame number value, and correspondingly the decoding ending condition is met. If the current to-be-decoded frame number is greater than zero, it means that the decoded frame number has not reached the video frame number value, and it is necessary to continue decoding.

S240, if the current to-be-decoded frame number meets the decoding ending condition, serving an end decoding instruction as the to-be-decoded video frame information.

In the present embodiment, the end decoding instruction may be understood as an instruction for indicating that the decoder may stop decoding.

For example, if the current to-be-decoded frame number meets the decoding ending condition, the end decoding instruction serves as the to-be-decoded video frame information, so as to inform the decoder to stop decoding through the end decoding instruction until the screen projection is continued and the decoder resume its operation.

S250, if the current to-be-decoded frame number does not meet the decoding ending condition, updating a frame number of a frame header sequence of the final video frame information, and determining the to-be-decoded video frame information based on the updated frame number of the frame header sequence.

In the present embodiment, the frame number of the frame header sequence may be understood as indicating an ordering of the final video frame in the video frame sequence.

For example, if the current to-be-decoded frame number does not meet the decoding ending condition, updating the frame number of the frame header sequence of the final video frame information, and determining the to-be-decoded video frame information based on the updated frame number of the frame header sequence, so that the decoder may decode the final video frame information for many times. For example, if the current to-be-decoded frame number is two frames, updating twice by modifying the frame number of the frame header sequence, to enable the decoded frame number to reach the video frame number value, and ensure that pictures displayed after decoding are all pictures corresponding to the final video frame.

In an embodiment, based on the foregoing embodiments, the updating a frame number of a frame header sequence of the final video frame information, and determining the to-be-decoded video frame information based on the updated frame number of the frame header sequence may include:
a2, extracting the frame number of the frame header sequence and a final video frame included in the final video frame information.

For example, the processor may extract the frame number of the frame header sequence and the final video frame from the final video frame information according to the type of data. Where if extracting from the final video frame information again, the frame number of the frame header sequence is an updated frame number of a frame header sequence last time.

b2, adding one to the frame number of the frame header sequence to obtain the updated frame number of the frame header sequence.

It should be known that if the frame number of the frame header sequence is not updated, the decoder may consider it as a duplicate frame and may discard it directly without decoding.

For example, the processor may add one to the frame number of the frame header sequence to obtain the updated frame number of the frame header sequence.

c2, serving the final video frame and the updated frame number of the frame header sequence as the to-be-decoded video frame information.

For example, the processor may use the final video frame and the updated frame number of the frame header sequence as to-be-decoded video frame information.

S260, transmitting the to-be-decoded video frame information to a decoder, and displaying a target picture fed back by the decoder corresponding to the to-be-decoded video frame information.

The video synchronous display method provided by Embodiment 2 involves, when receiving a screen projection pause instruction sent by the screen projection terminal, parsing a video frame number value of a received video frame sequence to which a current start frame belongs; determining a current to-be-decoded frame number according to a current decoded frame number of the determined video frame sequence combined with the video frame number value; if the current to-be-decoded frame number does not meet the decoding ending condition, updating a frame number of a frame header sequence of the final video frame information, and determining the to-be-decoded video frame information based on the updated frame number of the frame header sequence; transmitting the to-be-decoded video frame information to a decoder for decoding, and displaying a target picture after decoding. By filling the final video frame information into the decoder, the initialization problem of the decoder when restoring from the pause is solved, CPU resource consumption and VPU consumption are reduced, and the display contents of two display screens of the screen projection terminal and the screen projected terminal are enabled to keep synchronous in the pause state, the buffered video frames in the decoder are decoded and played in a reasonable solution. In this way, the synchronization of video display at both cross-system's terminals is realized, and a rapid response of the screen projected terminal when the screen projection terminal restores playing is realized.

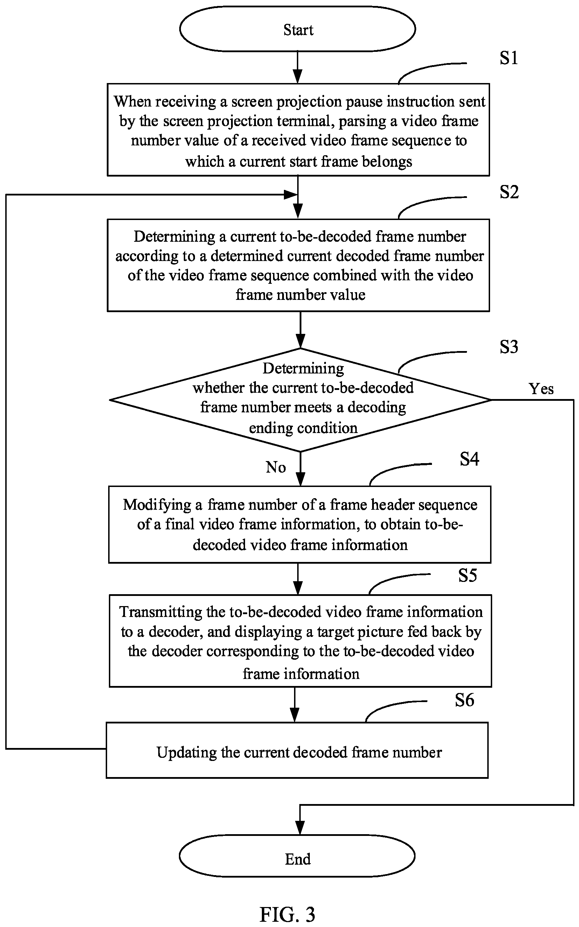

Exemplarily, to facilitate the understanding of the present embodiment, an example is used for explanation. FIG. 3 is an example flowchart of a video synchronous display method according to Embodiment 2 of the present application. As shown in FIG. 3, the method includes steps below:
51, when receiving a screen projection pause instruction sent by the screen projection terminal, parsing a video frame number value of a received video frame sequence to which a current start frame belongs;
S2, determining a current to-be-decoded frame number according to a determined current decoded frame number of the video frame sequence combined with the video frame number value;
S3, determining whether the current to-be-decoded frame number meets a decoding ending condition, if it is Yes, then ending, if it is No, skipping to step S4;
S4, modifying a frame number of a frame header sequence of a final video frame information, to obtain to-be-decoded video frame information;
S5, transmitting the to-be-decoded video frame information to a decoder, and displaying a target picture fed back by the decoder corresponding to the to-be-decoded video frame information; and
S6, updating the current decoded frame number, and return to step S2.

### Embodiment 3

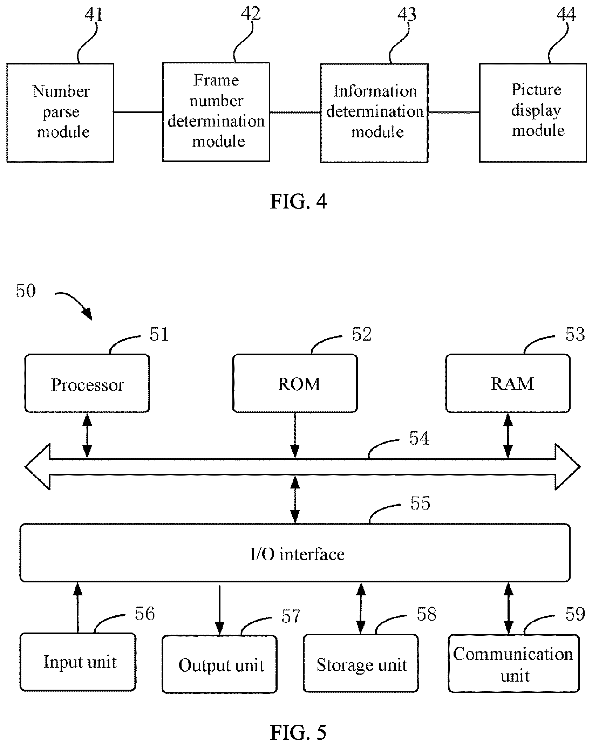

FIG. 4 is a structural schematic diagram of a video synchronous display apparatus according to Embodiment 3 of the present application. As shown in FIG. 4, the apparatus include: a number parse module 41, a frame number determination module 42, an information determination module 43 and a picture display module 44, where,
the number parse module 41, configured to, when receiving a screen projection pause instruction sent by the screen projection terminal, parse a video frame number value of a received video frame sequence to which a current start frame belongs;
the frame number determination module 42, configured to determine a current to-be-decoded frame number according to a determined current decoded frame number of the video frame sequence combined with the video frame number value;
the information determination module 43, configured to determine to-be-decoded video frame information according to the current to-be-decoded frame number and a received final video frame information; where the final video frame information is generated at the screen projection terminal by encoding video data corresponding to a pause picture;
the picture display module 44, configured to transmit the to-be-decoded video frame information to a decoder, and display a target picture fed back by the decoder corresponding to the to-be-decoded video frame information, where the target picture is the same as the pause picture.

Where the screen projected terminal belongs to a first operating system, and the screen projection terminal belongs to a second operating system.

The embodiments of the present application are executed by a first chip, the first chip serves as a screen projected terminal and receives screen projection data and a screen projection instruction sent by a second chip serving as a screen projection terminal, the method includes: after receiving a screen projection pause instruction sent by the screen projection terminal, parsing a video frame number value of a received video frame sequence to which a current start frame belongs; determining a current to-be-decoded frame number according to a determined current decoded frame number of the video frame sequence combined with the video frame number value; determining to-be-decoded video frame information according to the current to-be-decoded frame number and a received final video frame information; transmitting the to-be-decoded video frame information to a decoder, and displaying a target picture fed back by the decoder corresponding to the to-be-decoded video frame information. The method realizes the synchronization of video display at both cross-system's terminals on the principle of relatively small CPU resource consumption and VPU consumption, and realizes the rapid response of the screen projected terminal when the screen projection terminal restores playing.

In an embodiment, the information determination module 43 includes:
a condition determining unit, configured to determine whether the current to-be-decoded frame number meets a decoding ending condition;
a first determination unit, configured to, in response to the current to-be-decoded frame number meeting the decoding ending condition, serve an end decoding instruction as the to-be-decoded video frame information;
a second determination unit, configured to, in response to the current to-be-decoded frame number not meeting the decoding ending condition, update a frame number of a frame header sequence of the final video frame information, and determine the to-be-decoded video frame information based on the updated frame number of the frame header sequence.

In an embodiment, the second determination unit may be configured to:
extract the frame number of the frame header sequence and a final video frame included in the final video frame information;
add one to the frame number of the frame header sequence to obtain an updated frame number of the frame header sequence; and
serve the final video frame and the updated frame number of the frame header sequence as the to-be-decoded video frame information.

In an embodiment, the apparatus further includes: a frame number update module.

The frame number update module is configured to: after transmitting the to-be-decoded video frame information to a decoder, and displaying a target picture fed back by the decoder corresponding to the to-be-decoded video frame information, update the current decoded frame number based on the to-be-decoded video frame information, to obtain an updated current decoded frame number.

In an embodiment, the apparatus further includes: a screen projection display unit.

The screen projection display unit is configured to: when receiving a screen projection continuation instruction, determining a picture to be displayed and displaying the picture to be displayed, according to received data to be projected.

In an embodiment, the screen projection display unit may be configured to:
parse a target video frame number value of a target video frame sequence to which the data to be projected belongs;
reset the current decoded frame number of the target video frame sequence, to obtain a reset current decoded frame number;
disassemble the data to be projected, to form a data packet to be decoded;
transmit the data packet to be decoded to a decoder for decoding; and
receive a picture to be displayed fed back by the decoder, and displaying the picture to be displayed.

The video synchronous display apparatus provided by the embodiments of the present application may execute the video synchronous display method provided by any embodiment of the present application, and has corresponding functional modules and beneficial effects corresponding to the implementation of the method.

### Embodiment 4

FIG. 5 shows a structural schematic diagram of an electronic device 50 according to an embodiment of the present application. The electronic devices are intended to represent various forms of digital computers, such as laptop computers, desktop computers, workstations, personal digital assistants, servers, blade servers, mainframe computers, and other appropriate computers. The electronic devices may also represent various forms of mobile devices, such as personal digital processing, cellular phones, smart phones, wearable devices (such as helmets, glasses, watches, etc.) and other similar computing devices. The components shown in the present application, their connections and relationships, and their functions are only exemplary, and are not intended to limit the implementation of the present application as described and/or claimed herein.

As shown in FIG. 5, the electronic device 50 includes at least one processor 51, and a memory communicatively connected to the at least one processor 51, such as read-only memory (ROM) 52, random access memory (RAM) 53, etc. where the memory stores a computer program executable by the at least one processor, the processor 51 may perform various appropriate actions and processes according to a computer program stored in the read-only memory (ROM) 52 or a computer program loaded into a random access memory (RAM) 53 from a storage unit 58. In the RAM 53, various programs and data required for the operation of the electronic device 50 may also be stored. The processor 51, the ROM 52 and the RAM 53 are connected to each other through a bus 54. An input/output (I/O) interface 55 is also connected to the bus 54.

A plurality of components of the electronic device 50 are connected to the I/O interface 55, including an input unit 56, such as a keyboard, a mouse, etc.; an output unit 57, such as various types of displays, speakers, etc.; a storage unit 58, such as a magnetic disk, an optical disk, etc.; and a communication unit 59, such as a network card, a modem, a wireless communication transceiver, etc. The communication unit 59 allows the electronic device 50 to exchange information/data with other devices through a computer network such as the Internet and/or various telecommunication networks.

The processor 51 may be various general-purpose and/or special-purpose processing components with processing and computing capabilities. Some examples of the processor 51 include, but are not limited to, a central processing unit (CPU), a graphics processing unit (GPU), various specialized artificial intelligence (AI) computing chips, various processors running machine learning model algorithms, digital signal processor (DSP), and any appropriate processors, controllers, microcontrollers, etc. The processor 51 executes various methods and processes described above, such as a video synchronous display method.

In some embodiments, the video synchronous display method may be implemented as a computer program, which tangibly included in a computer-readable storage medium, such as the storage unit 58. In some embodiments, part or all of the computer program may be loaded and/or installed on the electronic device 50 via the ROM 52 and/or the communication unit 59. When the computer program is loaded into the RAM 53 and executed by the processor 51, one or more steps of the video synchronous display method described above may be executed. Alternatively, in other embodiments, the processor 51 may be configured to execute the video synchronous display method by any other suitable means (for example, by means of firmware).

Various implementations of the systems and techniques of the present application described above may be implemented in a digital electronic circuitry system, an integrated circuit system, a field programmable gate array (FPGA), an application specific integrated circuit (ASIC), an application specific standard product (ASSP), a system on chip (SOC), a complex programmable logic device (CPLD), computer hardware, firmware, software, and/or their combinations. These various implementations may include: being implemented in one or more computer programs, the one or more computer programs may be executed and/or interpreted on a programmable system including at least one programmable processor, the programmable processor may be a special-purpose or general-purpose programmable processor and may receive data and instructions from a storage system, at least one input device, and at least one output device, and transmit the data and instructions to the storage system, the at least one input device, and the at least one output device.

The computer program for implementing the method of the present application may be written in any combination of one or more programming languages. The computer program may be provided to a processor of a general-purpose computer, a special-purpose computer or other programmable data processing apparatus, such that the computer program, when executed by the processor, causes the functions/operations specified in the flowcharts and/or block diagrams to be implemented. The computer program may be completely executed on a machine, partially executed on a machine, partially executed on a machine as a separate software package and partially executed on a remote machine, or completely executed on a remote machine or server.

In the context of the present application, a computer-readable storage medium may be a tangible medium, which may contain or store a computer program for use by or in combination with an instruction execution system, apparatus or device. A computer-readable storage medium may include, but is not limited to, an electronic, magnetic, optical, electromagnetic, infrared, or semiconductor system, apparatus or device, or any appropriate combination of the above. Alternatively, the computer-readable storage medium may be a machine-readable signal medium. Examples of the machine-readable storage medium may include an electrical connection based on one or more wires, a portable computer disk, a hard disk, a random access memory (RAM), a read-only memory (ROM), an erasable programmable read-only memory (EPROM) or flash memory, optical fiber, compact disc read-only memory (CD-ROM), optical storage device, magnetic storage device, or any appropriate combination of the above.

The storage medium may be a non-transitory storage medium.

In order to provide interaction with a user, the systems and techniques described herein may be implemented on an electronic device, the electronic device has a display device for displaying information to the user (e.g., a cathode ray tube (CRT) or a liquid crystal display (LCD) monitor); and a keyboard and a pointing device (e.g., a mouse or a trackball) through which a user may provide input to the electronic device. Other kinds of devices may also be used to provide interaction with a user; For example, the feedback provided to the user may be any form of sensory feedback (e.g., visual feedback, auditory feedback, or tactile feedback); and the input from the user may be received in any form (including acoustic input, voice input or tactile input).

The systems and techniques described herein may be implemented in a computing system which includes a back-end component (e.g., as a data server), a computing system which includes a middleware component (e.g., an application server), or a computing system which includes a front-end component (e.g., a user computer with a graphical user interface or a web browser, through which a user may interact with implementations of the systems and techniques described herein), or a computing system which includes any combination of such the back-end component, the middleware component or the front-end component. Components of the system may be interconnected by any form or medium of digital data communication (e.g., communication network). Examples of the communication network include: Local Area Network (LAN), Wide Area Network (WAN), blockchain network and Internet.

A computing system may include a client and a server. The client and the server are generally far away from each other and usually interact through a communication network. The relationship between the client and the server is generated by computer programs which run on corresponding computers and have a client-server relationship with each other. The server may be a cloud server, also known as a cloud computing server or a cloud host, and it is a host product in the cloud computing service system, so as to solve the defects of difficult management and weak business expansion in the traditional physical host and virtual private server (VPS) services.

It should be understood that the steps may be reordered, added or deleted using the various forms of flow shown above. For example, the steps described in the present application may be executed in parallel, sequentially or in a different order, there is no restriction on this so long as the expected results of the technical solution of the present application may be realized.

The above specific embodiments do not limit the protection scope of the present application. It should be understood by those skilled in the art that various modifications, combinations, sub-combinations and substitutions may be made according to design requirements and other factors.

## Claims

1. A video synchronous display method, executed by a first chip, the first chip serving as a screen projected terminal and receiving screen projection data and a screen projection instruction sent by a second chip serving as a screen projection terminal, the method comprises:
in response to receiving a screen projection pause instruction sent by the screen projection terminal, parsing a video frame number value of a received video frame sequence to which a current start frame belongs;
determining a current to-be-decoded frame number according to a determined current decoded frame number of the video frame sequence combined with the video frame number value;
determining to-be-decoded video frame information according to the current to-be-decoded frame number and a received final video frame information; wherein the final video frame information is generated at the screen projection terminal by encoding video data corresponding to a pause picture;
transmitting the to-be-decoded video frame information to a decoder, and displaying a target picture fed back by the decoder corresponding to the to-be-decoded video frame information, wherein the target picture is the same as the pause picture.

2. The method according to claim 1, wherein the determining to-be-decoded video frame information according to the current to-be-decoded frame number and the received final video frame information comprises:
determining whether the current to-be-decoded frame number meets a decoding ending condition;
in response to the current to-be-decoded frame number meeting the decoding ending condition, serving an end decoding instruction as the to-be-decoded video frame information;
in response to the current to-be-decoded frame number not meeting the decoding ending condition, updating a frame number of a frame header sequence of the final video frame information and determining the to-be-decoded video frame information based on the updated frame number of the frame header sequence.

3. The method according to claim 2, wherein the updating the frame number of the frame header sequence of the final video frame information and determining the to-be-decoded video frame information based on the updated frame number of the frame header sequence comprises:
extracting the frame number of the frame header sequence and a final video frame included in the final video frame information;
adding one to the frame number of the frame header sequence to obtain the updated frame number of the frame header sequence;
serving the final video frame and the updated frame number of the frame header sequence as the to-be-decoded video frame information.

4. The method according to claim 1, wherein after the transmitting the to-be-decoded video frame information to the decoder, and displaying the target picture fed back by the decoder corresponding to the to-be-decoded video frame information, the method further comprises:
updating the current decoded frame number based on the to-be-decoded video frame information, to obtain an updated current decoded frame number.

5. The method according to claim 1, further comprising:
in response to receiving a screen projection continuation instruction, determining a picture to be displayed and displaying the picture to be displayed, according to received data to be projected.

6. The method according to claim 5, wherein the determining the picture to be displayed and displaying the picture to be displayed according to received data to be projected comprises:
parsing a target video frame number value of a target video frame sequence to which the data to be projected belongs;
resetting the current decoded frame number of the target video frame sequence, to obtain a reset current decoded frame number;
disassembling the data to be projected, to form a data packet to be decoded;
transmitting the data packet to be decoded to a decoder for decoding; and
receiving the picture to be displayed fed back by the decoder, and displaying the picture to be displayed.

7. The method according to claim 1, wherein the screen projected terminal belongs to a first operating system, and the screen projection terminal belongs to a second operating system.

8. A video synchronous display apparatus, comprising:
a number parse module, configured to, in response to receiving a screen projection pause instruction sent by a screen projection terminal, parse a video frame number value of a received video frame sequence to which a current start frame belongs;
a frame number determination module, configured to determine a current to-be-decoded frame number according to a determined current decoded frame number of the video frame sequence combined with the video frame number value;
an information determination module, configured to determine to-be-decoded video frame information according to the current to-be-decoded frame number and a received final video frame information; wherein the final video frame information is generated at the screen projection terminal by encoding video data corresponding to a pause picture; and
a picture display module, configured to transmit the to-be-decoded video frame information to a decoder, and display a target picture fed back by the decoder corresponding to the to-be-decoded video frame information, wherein the target picture is the same as the pause picture.

9. An electronic device, comprising:
at least one processor; and
a memory communicatively connected to the at least one processor; wherein
the memory stores a computer program executable by the at least one processor, and the computer program is executed by the at least one processor, to enable the at least one processor to execute the video synchronous display method according to any one of claims 1-7.

10. A computer-readable storage medium, wherein the computer-readable storage medium stores computer instructions, which, when executed by the processor, implement the video synchronous display method according to any one of claims 1-7.
